# FASCICULE DE BREVET EUROPEEN

(11) **EP 1 270 390 B1**
(45) Date de publication et mention de la délivrance du brevet: **06.08.2008**
(21) Numéro de dépôt: 02291408.9
(22) Date de dépôt: 07.06.2002
(51) Int. Cl.: B62K 25/04, B62K 21/02

(54) **Elément support rigide de roue de bicyclette, et amortisseur de vibrations pour un tel élément.**
Stützelement für das Rad eines Fahrrades mit einem Vibrationsdämpfer
Support element for a bicycle wheel including a vibration damper

(30) Priorité: 22.06.2001 FR 0108240
(43) Date de publication de la demande: 02.01.2003
(73) Titulaire: TIME SPORT INTERNATIONAL, 58 640 Varennes-Vauzelles (FR)
(72) Inventeur: Roussin-Bouchard, Xavier, 38140 La Murette (FR); Gueugneaud, Jean-Marc, 38110 St. Clair de la Tour (FR)
(74) Mandataire: Michardière, Bernard

(56) Documents cités:
- DE-A- 3 943 323
- FR-A- 2 810 291
- GB-A- 742 813
- US-A- 1 221 823
- US-A- 6 109 637

## Description

L'invention est relative à un élément support rigide de roue de bicyclette, à une extrémité duquel peut être monté un axe de roue, comportant un amortisseur de vibrations.

Un tel élément support de roue peut être constitué par un fourreau de fourche avant de bicyclette à l'extrémité duquel est prévue une patte pour monter un axe supportant une roue, ou par un hauban supportant la roue arrière.

L'invention concerne plus particulièrement, mais non exclusivement, un élément support rigide de roue réalisé, au moins en partie, en matériau composite. Par l'expression "matériau composite" on désigne un matériau constitué de fibres à haute résistance mécanique, en particulier de fibres de carbone, noyées dans une résine, du type époxy ou polyester ou analogue, polymérisée.

Lors du roulement d'une bicyclette, la granulosité de la route induit des vibrations dans toute la bicyclette. Ces vibrations sont souvent la cause d'une fatigue prématurée du cycliste. De plus, elles favorisent l'endommagement des matériaux constituant la bicyclette. Les inégalités du sol ou les obstacles rencontrés ajoutent leurs effets néfastes à ceux de la granulosité.

Des fourches suspendues ont été proposées, mais elles sont lourdes et peu esthétiques, et nécessitent généralement plusieurs pièces pour réaliser des fourreaux ou des haubans télescopiques.

D'autres solutions proposées ont pour inconvénient de nuire à la rigidité globale de la fourche et, parfois, de modifier la géométrie de la bicyclette.

La Société demanderesse a déposé une demande de brevet français n° 00 07668, le 16 juin 2000, pour un élément support rigide de roue de bicyclette, comportant un moyen amortisseur, selon lequel les vibrations lors du roulement sont filtrées et réduites, sans entraîner pour autant une augmentation sensible de poids et/ou une construction compliquée, et sans altérer la rigidité de l'élément support, ni la géométrie de la bicyclette.

GB 742 813 concerne un élément support de roue de bicyclette comprenant un dispositif pour absorber les chocs de roulement de la roue avant. Le dispositif comporte de chaque côté de la roue avant une tige montée coulissante dans un élément supérieur tubulaire, avec interposition d'un ressort de compression. Les fourreaux de la fourche, par leur forme et leur disposition, sont prévus pour permettre un mouvement élastique vers le haut et vers le bas de l'axe de la roue avant selon une amplitude supérieure à celle obtenue avec des fourches classiques. Le dispositif exploite le désalignement axial de la tige par rapport à l'élément supérieur pour générer un frottement qui s'oppose au libre déplacement relatif des pièces.

Un tel dispositif ne peut convenir à des fourches classiques, avec amplitude de déformation réduite. Le frottement entre pièces solides désalignées n'est pas satisfaisant pour assurer une bonne tenue du système dans le temps et un bon amortissement des vibrations.

US 6 109 637 concerne un dispositif d'amortissement pour bicyclette installé sur les haubans arrière du cadre. Ce dispositif comporte une plaque support métallique et un coussin en matière élastomère formant un ensemble relativement lourd. Ce dispositif apparaît en outre destiné essentiellement aux haubans arrière.

L'invention a pour but, surtout, de fournir un élément support rigide de roue de bicyclette qui soit d'une construction légère, simple et efficace pour être monté aussi bien sur un élément support de roue avant que de roue arrière, et qui permette d'amortir une grande plage de fréquences et des intensités différentes.

Selon l'invention, un élément support rigide de roue de bicyclette, à une extrémité duquel peut être monté un axe de roue, comporte un amortisseur de vibrations comprenant une tige rigide s'étendant sensiblement parallèlement à l'élément support entre deux zones de cet élément dont la distance peut varier lors d'une flexion de l'élément, chaque extrémité de la tige étant liée à l'une desdites zones, et est caractérisé par le fait que la liaison d'au moins une extrémité de la tige avec l'élément support comprend un élément en matière viscoélastique propre à travailler entre la tige et une butée solidaire de l'élément support, l'élément en matière viscoélastique étant formé par un manchon en matière viscoélastique engagé autour de l'extrémité de la tige et collé à celle-ci par sa surface interne, le manchon étant lui-même engagé dans un logement de la butée, et étant fixé par sa surface externe à la paroi du logement.

De préférence, deux butées sont rapportées et fixées à l'extérieur sur l'élément support de roue, la tige étant disposée entre ces butées avec interposition à chaque extrémité d'un élément en matière viscoélastique formé par un manchon en matière viscoélastique.

D'autres caractéristiques de l'élément support rigide de roue selon l'invention sont données dans les revendications 3 à 11.

L'invention concerne également une fourche avant de bicyclette et un hauban arrière équipés d'un amortisseur de vibrations selon l'invention.

L'invention consiste, mises à part les dispositions exposées ci-dessus, en un certain nombre d'autres dispositions dont il sera plus explicitement question ci-après à propos d'un exemple de réalisation décrit en détail avec référence aux dessins ci-annexés, mais qui n'est nullement limitatif. Sur ces dessins :
Fig.1 est une vue de côté d'une fourche avant de bicyclette selon l'invention.
Fig.2 est une vue suivant la flèche II de Fig. 1.
Fig.3 montre à plus grande échelle, avec partie en coupe, un fourreau de la fourche avec amortisseur
Fig.4 est une vue en perspective, à plus grande échelle, de l'amortisseur avant sa mise en place sur le fourreau.
Fig.5 est une coupe partielle, à grande échelle, montrant l'extrémité inférieure de la tige d'amortisseur au repos.
Fig.6 montre, semblablement à Fig.5, l'extrémité de la tige de l'amortisseur avec la couche de matière viscoélastique déformée.
Fig.7, enfin, est une vue d'un hauban arrière avec amortisseur selon l'invention.

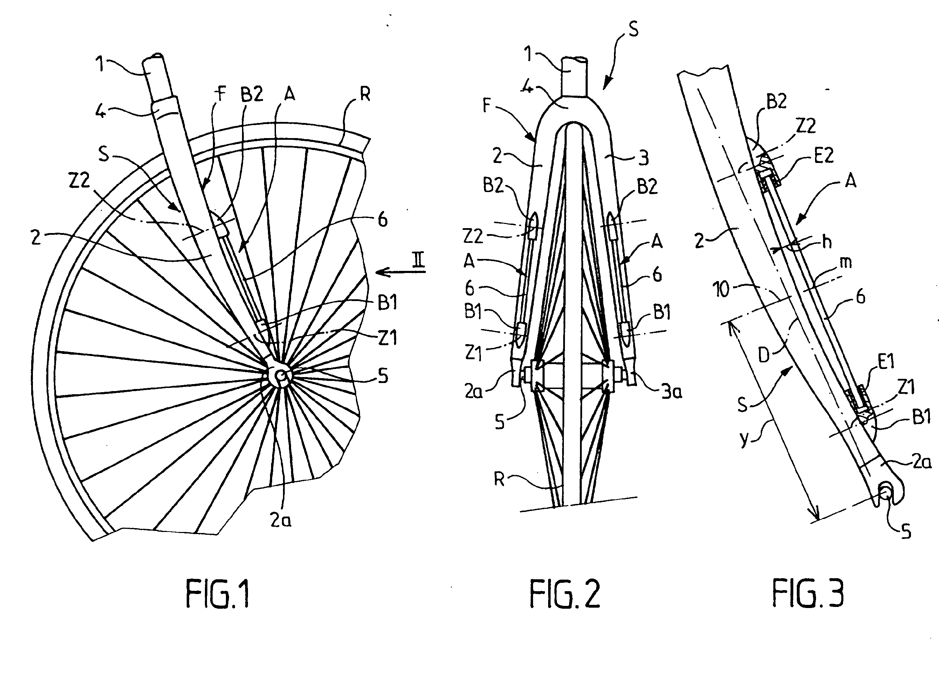

En se reportant aux Figs.1 à 3 des dessins, on peut voir une fourche avant F de bicyclette comportant un pivot de direction 1 solidaire, vers le bas, de deux fourreaux 2, 3 reliés au pivot par une tête de fourche 4. Les fourreaux 2 et 3 constituent des éléments S supports de la roue avant R de la bicyclette. Ces fourreaux sont séparés par un espace permettant le passage de la roue R, laquelle est montée sur un axe 5 engagé dans des pattes 2a, 3a fixées aux extrémités inférieures des fourreaux 2, 3.

Un amortisseur de vibrations A est prévu sur chaque fourreau 2, 3. L'amortisseur A comprend une tige rigide 6 s'étendant sensiblement parallèlement à la direction longitudinale moyenne D du fourreau 2, 3 entre deux zones Z1, Z2 dont la distance peut varier lors d'une flexion du fourreau . Selon l'exemple représenté, la tige 6 est cylindrique de révolution . Mais la tige 6 peut avoir une forme autre que cylindrique en particulier une forme prismatique, le mot "tige" étant à comprendre dans un sens très général comme désignant un élément rigide, constituant une sorte de poutre.

Les vibrations lors du roulement de la bicyclette proviennent de déformations de flexion des fourreaux 2 et 3, surtout dans un plan moyen sensiblement parallèle au plan moyen de la roue R. La description qui va suivre concerne un amortisseur disposé de manière à agir principalement sur ce type de vibrations. Pour les vibrations latérales, on pourrait utiliser un amortisseur semblable mais disposé différemment, c'est à dire placé sur le côté extérieur du fourreau.

Chaque extrémité de la tige rigide 6 est liée à la zone respective Z1, Z2 du fourreau par l'intermédiaire d'un élément E1, E2 en matière viscoélastique propre à travailler entre une butée B1, B2 solidaire du fourreau 2, 3 et la tige 6. Les butées B1, B2 sont rapportées et fixées à l'extérieur sur le fourreau 2, 3, au niveau des zones Z1, Z2.

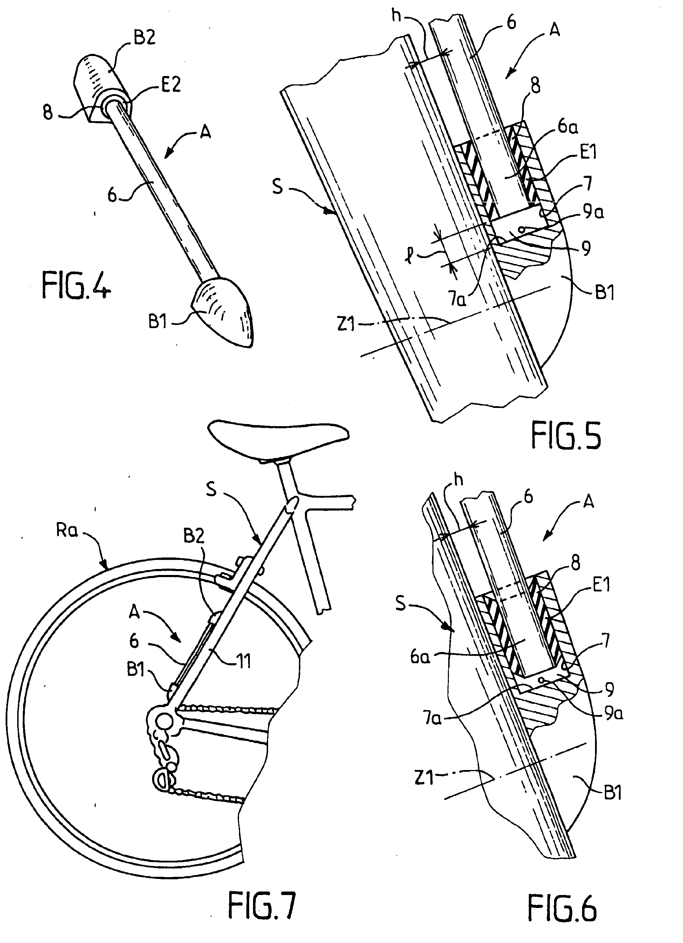

Les butées B1, B2 peuvent être réalisées en matière thermoplastique rigide. Chaque butée comporte un logement 7 (voir Figs. 5 et 6) propre à recevoir une extrémité 6a de la tige 6. Les butées B1, B2 sont fixées, notamment par collage, sur le bord avant de chaque fourreau 2, 3. La surface de la butée B1, B2, s'appliquant contre le fourreau a une forme concave prévue pour épouser la convexité du fourreau.

L'élément E1, E2 est formé par un manchon 8 (voir Fig.5) en matière élastomère entourant l'extrémité 6a de la tige et fixé à celle-ci par collage sur sa surface intérieure. La face frontale de l'extrémité 6a est libre. La surface extérieure du manchon 8 est fixée, notamment par collage, contre la surface interne du logement 7 de la butée.

Un espace libre 9 existe entre la face frontale de l'extrémité 6a de la tige et le fond 7a du logement 7. La dimension 1 du logement 9 suivant l' axe de la tige 6 est suffisamment grande pour que l'extrémité inférieure de la tige 6a ne vienne pas en butée contre le fond du logement 9 lorsque le manchon 8 subit sa déformation maximale comme illustré sur Fig.6.

Pour que l'amortissement des vibrations soit assuré uniquement par le manchon 8 en matière viscoélastique, sans faire intervenir le volume d'air emprisonné dans l'espace 9, on peut prévoir un ou plusieurs évents 9a mettant en communication l'espace 9 avec l'atmosphère. Il serait possible également d' utiliser l'espace 9 pour faire intervenir un moyen élastique travaillant en compression.

L'amortisseur A avec sa tige rigide 6 est fixé en saillie sur l'élément support S à distance moyenne h de la surface extérieure de l'élément support S. Dans l'exemple représenté sur les dessins, la tige 6 est située en avant des fourreaux 2, 3 suivant le sens de progression de la bicyclette, et l'axe de la tige 6 est situé sensiblement dans le plan moyen du fourreau correspondant .

La tige 6 pourrait occuper une position autre que celle représentée sur les dessins, notamment elle pourrait être située à l'arrière des fourreaux, ou à l'extérieur sur le côté des fourreaux 2 et 3 pour amortir des vibrations latérales.

Les fourreaux 2 et 3 représentés sur les dessins ont une forme légèrement incurvée avec leur concavité tournée vers l'avant. En variante, les fourreaux 2 et 3 pourraient avoir une ligne moyenne rectiligne.

La tige 6 est avantageusement réalisée avec des fibres de carbone.

Les éléments viscoélastiques E1, E2 peuvent être choisis avec des propriétés d'amortissement différentes de manière à absorber des plages différentes de fréquences de vibrations . En général la fréquence critique de vibrations d'une fourche de bicyclette se situe aux environs de 130 Hz. Les propriétés d'amortissement des éléments viscoélastiques E1, E2 sont choisies pour assurer non seulement un amortissement maximum pour la fréquence critique, mais aussi un amortissement satisfaisant sur une plage de fréquences plus étendue. L'énergie dissipée par les éléments viscoélastiques est alors différente entre la partie haute et la partie basse de la tige 6.

Pour les faibles fréquences d'excitation, lors des déformations en flexion dans son plan moyen parallèle au plan moyen de la roue avant, chaque fourreau 2, 3 présente une flèche, ou amplitude de déformation maximale, au niveau d'une section 10 située à une distance y (voir Fig.3) du centre de l'ouverture des pattes d'extrémité 2a, 3a, des fourreaux. Cette distance y est généralement d'environ 7cm. De préférence la tige 6 est disposée de telle sorte que le milieu m de sa longueur se trouve au droit de la section 10 qui correspond à la zone frontale la plus déformée. Les butées B1, B2 sont alors sensiblement équidistantes de la section 10,

Le fonctionnement de l'amortisseur est le suivant.

Au repos, comme illustré sur Fig.5, le manchon 8 de matière élastomère n'est pas déformé.

Lors de la flexion d'un fourreau 2, 3, par exemple due à une aspérité de la route, une variation de la distance entre les zones Z1 et Z2 se produit . On considère le cas où la variation de distance correspond à un raccourcissement de la distance entre les zones Z1 et Z2.

Comme illustré sur Fig.6, l'extrémité de la tige 6 se rapproche du fond 7a du logement 7. Le manchon 8 de matière élastomère se déforme en cisaillement pour absorber cette variation de distance. Le travail en cisaillement du manchon 8 entraîne une dissipation d'énergie et donc une absorption de vibrations.

Les variations d'intensité de vibration sont compensées par une variation du mouvement de la tige 6 dans son logement 7.

En se reportant à Fig.7, on peut voir le montage du système d'amortissement A sur un hauban 11 constituant un élément support S pour une roue arrière Ra de bicyclette. L'amortisseur A est disposé avec sa tige 6 en arrière du hauban 11, les butées B1 et B2 étant collées sur la partie, arrière du hauban.

Le fonctionnement est le même que celui décrit précédemment.

Aussi bien pour la fourche avant que pour les haubans arrière, on peut faire varier le nombre de dispositifs amortisseurs présents ainsi que leur positionnement, selon que l'on cherche à absorber les vibrations dans le sens longitudinal , ou dans le sens latéral.

Le dispositif amortisseur de l'invention présente l'avantage de pouvoir être assemblé au fourreau après injection de la fourche F lorsque celle-ci est réalisée en matériau composite.

L'ensemble formé par la tige 6, les manchons 8 et les butées B1, B2 constitue un accessoire (voir Fig. 4) qui peut être vendu séparément et monté sur des fourches déjà présentes sur le marché.

## Revendications

1. Elément support rigide de roue de bicyclette, à une extrémité duquel peut être monté un axe de roue, comportant un amortisseur de vibrations (A), comprenant une tige rigide (6) s'étendant sensiblement parallèlement à l'élément support (S) entre deux zones (Z1, Z2) de cet élément dont la distance peut varier lors d'une flexion dudit élément, chaque extrémité de la tige (6) étant liée à l'une desdites zones (Z1, Z2), **caractérisé par le fait que** la liaison d'au moins une extrémité (6a) de la tige avec l'élément support comprend un élément (E1, E2) en matière viscoélastique propre à travailler entre la tige (6) et une butée (B1 ,B2) solidaire de l'élément support (S), l'élément en matière viscoélastique étant formé par un manchon (8) en matière viscoélastique engagé autour de l'extrémité (6a) de la tige et collé à celle-ci par sa surface interne, le manchon (8) étant lui-même engagé dans un logement (7) de la butée (B1, B2), et étant fixé par sa surface externe à la paroi du logement.

2. Elément support rigide de roue de bicyclette selon la revendication 1, **caractérisé par le fait que** deux butées (B1, B2) sont rapportées et fixées à l'extérieur sur l'élément (S) support de roue, la tige (6) étant disposée entre ces butées avec interposition à chaque extrémité d'un élément en matière viscoélastique formé par un manchon (8) en matière viscoélastique.

3. Elément support rigide de roue de bicyclette selon la revendication 2, **caractérisé par le fait que** les éléments en matière viscoélastique (E1, E2) prévus à chaque extrémité de la tige ont des propriétés d'amortissement différentes de manière à intervenir principalement pour des vibrations situées dans des plages de fréquences différentes.

4. Elément support rigide de roue de bicyclette selon l'une quelconque des revendications précédentes, **caractérisé par le fait que** les éléments en matière viscoélastique (E1, E2) sont disposés de manière à travailler en cisaillement.

5. Elément support rigide de roue de bicyclette selon l'une quelconque des revendications précédentes, **caractérisé par le fait que** la matière viscoélastique est une matière élastomère.

6. Elément support rigide de roue de bicyclette selon l'une quelconque des revendications précédentes, **caractérisé par le fait qu'**un espace libre (9) subsiste entre l'extrémité (6a) de la tige et le fond (7a) du logement de la butée, cet espace libre ayant une dimension (1) suffisante pour éviter que l'extrémité (6a) de la tige vienne en butée contre le fond du logement lors des déformations de l'élément support.

7. Elément support rigide de roue de bicyclette selon l'une quelconque des revendications précédentes, **caractérisé par le fait que** la tige rigide (6) de l'amortisseur est maintenue en saillie sur l'élément support (S) à distance (h) de la surface extérieure de cet élément support.

8. Elément support rigide de roue de bicyclette selon l'une quelconque des revendications précédentes, **caractérisé par le fait que** la tige (6) est cylindrique.

9. Elément support rigide de roue de bicyclette selon l'une quelconque des revendications précédentes, **caractérisé par le fait que** la tige (6) est réalisée en fibres de carbone.

10. Elément support rigide de roue de bicyclette selon l'une quelconque des revendications précédentes, **caractérisé par le fait que** la tige (6) est fixée sur l'élément support (S) de telle manière que sa partie médiane (m) se trouve sensiblement au droit de la partie (10) de l'élément support qui présente la plus grande déformation en flexion.

11. Elément support rigide de roue de bicyclette selon l'une quelconque des revendications précédentes, **caractérisé par le fait que** la tige (6) est fixée sur l'élément support (S) de telle manière que sa partie médiane (m) se trouve sensiblement à une distance (y) de l'ordre de 7 cm de l'axe géométrique de la roue.

12. Fourche avant de bicyclette comportant deux fourreaux (2,3) reliés à un pivot par une tête de fourche et séparés par un espace pour le passage de la roue, **caractérisée par le fait que** chaque fourreau (2, 3) de la fourche constitue un élément support (S) selon l'une quelconque des revendications 1 à 11.

13. Fourche avant de bicyclette selon la revendication 12, **caractérisée par le fait qu'**elle comporte sur chaque fourreau un moyen amortisseur de vibrations comprenant une tige rigide (6) s'étendant sensiblement parallèlement à l'élément support (S; 2,3) entre deux zones (Z1, Z2) de cet élément dont la distance peut varier lors d'une flexion de l'élément, chaque extrémité de la tige (6) étant liée à l'une desdites zones (Z1, Z2), la liaison d'au moins une extrémité (6a) de la tige avec l'élément support comprenant un élément (E1, E2) en matière viscoélastique propre à travailler entre une butée (B1, B2), solidaire de l'élément support (S), et la tige (6), l'élément en matière viscoélastique (E1, E2) étant formé par un manchon (8) en matière viscoélastique engagé autour de l'extrémité (6a) de la tige et collé à celle-ci par sa surface interne, le manchon (8) étant lui-même engagé dans un logement (7) de la butée (B1, B2), et étant fixé par sa surface externe à la paroi du logement

14. Hauban arrière de bicyclette constituant un élément support selon l'une quelconque des revendications 1 à 11.

## Claims

1. Bicycle wheel rigid support element, at one end of which a wheel axle can be mounted, comprising a vibration damper (A), comprising a rigid rod (6) extending substantially parallel to the support element (S) between two zones (Z1, Z2) of this element of which the distance may vary during the flexing of the said element, each end of the rod (6) being connected to one of the said zones (Z1, Z2), **characterized in that** the connection of at least one end (6a) of the rod to the support element comprises an element (E1, E2) made of viscoelastic material suitable for working between the rod (6) and a stop (B1, B2) fixedly attached to the support element (S), the element made of viscoelastic material being formed by a sleeve (8) made of viscoelastic material engaged around the end (6a) of the rod and bonded to the latter via its inner surface, the sleeve (8) itself being engaged in a housing (7) of the stop (B1, B2), and being attached via its outer surface to the wall of the housing.

2. Bicycle wheel rigid support element according to Claim 1, **characterized in that** two stops (B1, B2) are fitted and attached on the outside to the wheel support element (S), the rod (6) being placed between these stops with interposition at each end of an element made of viscoelastic material formed by a sleeve (8) made of viscoelastic material.

3. Bicycle wheel rigid support element according to Claim 2, **characterized in that** the elements made of viscoelastic material (E1, E2) provided at each end of the rod have different damping properties so as to operate mainly on vibrations situated in different frequency ranges.

4. Bicycle wheel rigid support element according to any one of the preceding claims, **characterized in that** the elements made of viscoelastic material (E1, E2) are placed so as to work in shearing mode.

5. Bicycle wheel rigid support element according to one of the preceding claims, **characterized in that** the viscoelastic material is an elastomer.

6. Bicycle wheel rigid support element according to any one of the preceding claims, **characterized in that** a free space (9) remains between the end (6a) of the rod and the bottom (7a) of the housing of the stop, this free space having a dimension (1) that is sufficient to prevent the end (6a) of the rod butting against the bottom of the housing during the deformations of the support element.

7. Bicycle wheel rigid support element according to any one of the preceding claims, **characterized in that** the rigid rod (6) of the damper is held in protrusion on the support element (S) at a distance (h) from the outer surface of this support element.

8. Bicycle wheel rigid support element according to any one of the preceding claims, **characterized in that** the rod (6) is cylindrical.

9. Bicycle wheel rigid support element according to any one of the preceding claims, **characterized in that** the rod (6) is made of carbon fibres.

10. Bicycle wheel rigid support element according to any one of the preceding claims, **characterized in that** the rod (6) is attached to the support element (S) so that its mid-portion (m) is substantially level with the portion (10) of the support element that has the largest flexing deformation.

11. Bicycle wheel rigid support element according to any one of the preceding claims, **characterized in that** the rod (6) is attached to the support element (S) so that its mid-portion (m) is substantially at a distance (y) of the order of 7 cm from the geometric axis of the wheel.

12. Bicycle front fork comprising two sliders (2, 3) connected to a pivot by a fork crown and separated by a space for the wheel to pass through, **characterized in that** each slider (2, 3) of the fork forms a support element (S) according to any one of Claims 1 to 11.

13. Bicycle front fork according to Claim 12,
**characterized in that** it comprises on each slider a vibration-damping means comprising a rigid rod (6) extending substantially parallel to the support element (S; 2, 3) between two zones (Z1, Z2) of this element whose distance may vary during the flexing of the element, each end of the rod (6) being connected to one of the said zones (Z1, Z2), the connection of at least one end (6a) of the rod to the support element comprising an element (E1, E2) made of viscoelastic material suitable for working between a stop (B1, B2), fixedly attached to the support element (S), and the rod (6), the element made of viscoelastic material (E1, E2) being formed by a sleeve (8) made of viscoelastic material engaged around the end (6a) of the rod and bonded to the latter via its inner surface, the sleeve (8) itself being engaged in a housing (7) of the stop (B1, B2) and being attached via its outer surface to the wall of the housing.

14. Bicycle rear stay forming a support element according to any one of Claims 1 to 11.

## Patentansprüche

1. Starres Stützelement für ein Rad eines Fahrrads, an dessen einem Ende eine Radachse montierbar ist, mit einem Vibrationsdämpfer (A), welcher eine starre Stange (6) umfasst, welche sich im Wesentlichen parallel zu dem Stützelement (S) zwischen zwei Zonen (Z1, Z2) des Elements erstreckt, deren Abstand bei einem Biegen des Elements variieren kann, wobei jedes Ende der Stange (6) mit einer der genannten Zonen (Z1, Z2) verbunden ist, **dadurch gekennzeichnet, dass** die Verbindung mindestens eines Endes (6a) der Stange mit dem Stützelement ein Element (E1, E2) aus viskoelastischem Material aufweist, das geeignet ist, zwischen der Stange (6) und einem fest mit dem Stützelement (S) verbundenen Anschlag (B1, B2) zu arbeiten, wobei das Element aus viskoelastischem Material durch eine Hülse (8) aus viskoelastischem Material gebildet ist, die um das Ende (6a) der Stange greift und mit ihrer Innenfläche an diese geklebt ist, wobei die Hülse (8) selbst in eine Aufnahme (7) des Anschlags (B1, B2) eingesetzt ist und mit ihrer Außenfläche an der Wand der Aufnahme befestigt ist.

2. Starres Stützelement für ein Rad eines Fahrrads nach Anspruch 1, **dadurch gekennzeichnet, dass** zwei Anschläge (B1, B2) an das Radstützelement (S) angesetzt und auf der Außenseite an diesem befestigt sind, wobei die Stange (6) unter Zwischenfügung eines an jedem Ende vorgesehenen Elements aus viskoelastischem Material, das durch eine Hülse (8) aus viskoelastischem Material gebildet, zwischen den Anschlägen angeordnet ist.

3. Starres Stützelement für ein Rad eines Fahrrads nach Anspruch 2, **dadurch gekennzeichnet, dass** die an jedem Ende der Stange vorgesehenen Elemente aus viskoelastischem Material (E1, E2) unterschiedliche Dämpfungsmaterialien aufweisen, so dass sie hauptsächlich bei Vibrationen wirksam sind, die in unterschiedlichen Frequenzbereichen liegen.

4. Starres Stützelement für ein Rad eines Fahrrads, nach einem der vorhergehenden Ansprüche, **dadurch gekennzeichnet, dass** die Elemente (E1, E2) aus viskoelastischem Material derart angeordnet sind, dass sie einander überschneidend arbeiten.

5. Starres Stützelement für ein Rad eines Fahrrads, nach einem der vorhergehenden Ansprüche, **dadurch gekennzeichnet, dass** es sich bei dem viskoelastischen Material um ein Elastomermaterial handelt.

6. Starres Stützelement für ein Rad eines Fahrrads, nach einem der vorhergehenden Ansprüche, **dadurch gekennzeichnet, dass** ein Freiraum (9) zwischen dem Ende (6a) der Stange und dem Boden (7a) der Aufnahme des Anschlags besteht, wobei dieser Freiraum eine Abmessung (I) aufweist, die ausreicht, um zu verhindern, dass das Ende (6a) der Stange bei Deformationen des Stützelements gegen den Boden der Aufnahme anschlägt.

7. Starres Stützelement für ein Rad eines Fahrrads, nach einem der vorhergehenden Ansprüche, **dadurch gekennzeichnet, dass** die starre Stange (6) des Dämpfers auf dem Stützelement (S) mit dem Abstand (h) von der Außenseite des Stützelements abstehend gehalten ist.

8. Starres Stützelement für ein Rad eines Fahrrads, nach einem der vorhergehenden Ansprüche, **dadurch gekennzeichnet, dass** die Stange (6) zylindrisch ist.

9. Starres Stützelement für ein Rad eines Fahrrads, nach einem der vorhergehenden Ansprüche, **dadurch gekennzeichnet, dass** die Stange (6) aus Kohlenstofffasern besteht.

10. Starres Stützelement für ein Rad eines Fahrrads, nach einem der vorhergehenden Ansprüche, **dadurch gekennzeichnet, dass** die Stange (6) an dem Stützelement (S) derart angebracht ist, dass ihr Mittelteil (m) sich im Wesentlichen im Bereich des Teils (10) des Stützelements befindet, der die größte Biegeverformung aufweist.

11. Starres Stützelement für ein Rad eines Fahrrads, nach einem der vorhergehenden Ansprüche, **dadurch gekennzeichnet, dass** die Stange (6) an dem Stützelement (S) derart angebracht ist, dass ihr Mittelteil (m) sich im Wesentlichen in einer Entfernung (y) in der Größenordnung von 7 cm von der Geometrieachse des Rades befindet.

12. Fahrradvordergabel mit zwei Schenkeln (2, 3), die über einen Gabelkopf mit einem Drehzapfen verbunden und durch einen Zwischenraum für den Durchtritt des Rades voneinander beabstandet sind, **dadurch gekennzeichnet, dass** jeder Schenkel (2, 3) der Gabel aus einem Stützelement (S) nach einem der Ansprüche 1 bis 11 besteht.

13. Fahrradvordergabel nach Anspruch 12, **dadurch gekennzeichnet, dass** sie an jedem Schenkel eine Vibrationsdämpfereinrichtung mit einer starren Stange (6) aufweist, welche sich im Wesentlichen parallel zu dem Stützelement (S; 2, 3) zwischen zwei Zonen (Z1, Z2) des Elements erstreckt, deren Abstand bei einem Biegen des Elements variieren kann, wobei jedes Ende der Stange (6) mit einer der genannten Zonen (Z1, Z2) verbunden ist, wobei die Verbindung mindestens eines Endes (6a) der Stange mit dem Stützelement ein Element (E1, E2) aus viskoelastischem Material aufweist, das geeignet ist, zwischen der Stange (6) und einem fest mit dem Stützelement (S) verbundenen Anschlag (B1, B2) zu arbeiten, wobei das Element (E1, E2) aus viskoelastischem Material durch eine Hülse (8) aus viskoelastischem Material gebildet ist, die um das Ende (6a) der Stange greift und mit ihrer Innenfläche an diese geklebt ist, wobei die Hülse (8) selbst in eine Aufnahme (7) des Anschlags (B1, B2) eingesetzt ist und mit ihrer Außenfläche an der Wand der Aufnahme befestigt ist.

14. Hintere Sattelstrebe eines Fahrrades, welche ein Stützelement nach einem der Ansprüche 1 bis 11 bildet.
